Europäisches Patentamt

(19) European Patent Office

Office européen des brevets

(11) Publication number: **0 139 204**
**A2**

## (12) EUROPEAN PATENT APPLICATION

(21) Application number: **84110748.5**

(22) Date of filing: **08.09.84**

(51) Int. Cl.⁴: **G 01 G 21/22**

(30) Priority: **23.09.83 US 535271**
**20.01.84 US 572639**

(43) Date of publication of application:
**02.05.85 Bulletin 85/18**

(84) Designated Contracting States:
**DE FR GB SE**

(71) Applicant: **Masstron Scale, Inc.**
**550 Schrock Road**
**Columbus Ohio 43229(US)**

(72) Inventor: **Weihs, Frederick H.**
**3643 Denise Drive**
**Toledo, Ohio 43613(US)**

(74) Representative: **Rottmann, Maximilian R,**
**Hug Interlizenz AG Alte Zürcherstrasse 49**
**CH-8903 Birmensdorf/ZH(CH)**

(54) Scale assembly with improved platform.

(57) A scale assembly for use in weighing loads including a platform to receive a load and a plurality of transducers to provide and output indicative of the magnitude of the load. The improved platform includes top and bottom panels which are supported by sheet metal rib panels arranged in a beam-truss construction. The beam-truss arrangement of the rib panels enables horizontal and vertical shear forces to be transmitted through the rib panels. Thus construction results in the platform having a high strength and rigidity to weight ratio. Thus, each of the rib panels extends throughout the length of the scale platform and has major side surfaces which are skewed relative to the top and bottom panels. The rib panels cooperate with the top and bottom panels to define a plurality of empty cavities which have a triangular cross sectional configuration and extend lengthwise of the scale platform. Some of the cavities are disposed in an upper array which extends downwardly from the top panel. Other cavities are disposed in a lower array which extends upwardly from the bottom panel. The cavities in the lower array are interspersed with the cavities in the upper array.

./...

FIG. 1

SCALE ASSEMBLY WITH IMPROVED PLATFORM

The present invention relates to a new and improved scale assembly and specifically to a scale assembly having an improved platform.

Weighing scales have been built with metal platforms. It has been suggested that the platform of a scale be constructed with flat top and bottom panels which are interconnected by a plurality of I-beams. The I-beams extend lengthways of the scale platform in a manner similar to that shown in U.S. Patent 3,103,984. Other scale platforms have top and bottom panels which are separated by tubular metal members rather than I-beams.

Although known scale platforms have, to some extent at least, been generally satisfactory in operation, they have been relatively heavy. A heavy scale platform adds to the initial or dead weight which must be carried by force transducers. Since the transducers have a limited operating range, a relatively heavy scale platform reduces the load which can be weighed by the transducers. In addition, relatively heavy known scale platforms tend to cause deflection of the transducers and a resulting weighing error due to non-vertical forces being sensed by the transducers.

The present invention relates to a scale assembly having a new and improved platform which has a relatively high strength to weight ratio and a relatively high rigidity to weight ratio. The relatively light weight of the scale platform results in a lower initial or dead weight on the transducers. Therefore, heavier loads can be accurately weighed by the transducers. In addition, the relatively light weight of the platform tends to minimize deflection of the transducer components to minimize weighing errors due to non-vertical forces being sensed by the transducers. The light weight of the platform also enables the scale assembly to be installed in relatively poor soil conditions without pilings or other major reinforcing.

The scale platform is, for its weight, relatively strong and can resist both vertical and horizontal shear forces at any point. The strength of the platform is essentially the same in lengthwise and crosswise directions so that a load can be moved onto and off of the scale platform in any direction. The uniform strength of the platform makes it feasible to build a relatively wide platform.

The new and improved platform includes parallel top and bottom panels which are interconnected by a beam-truss structure. The beam-truss structure is formed by rib panels which cooperate with the top and bottom panels to define longitudinally extending empty cavities having a triangular cross sectional configuration. The rib panels transmit load forces as beams in a direction parallel to the longitudinal axes of the rib panels. The rib panels transmit load forces as a truss in a direction transverse to the longitudinal axes of the panels.

Accordingly, the object of this invention is to provide a new and improved scale assembly having a light weight and strong platform with top and bottom panels which are interconnected by a truss formed of rib panels.

The foregoing and other objects and features of the present invention will become more apparent upon consideration of the following description taken in connection with the accompanying drawings wherein:

Fig. 1 is a fragmentary top plan view of a scale platform constructed in accordance with the present invention, portions of the platform being broken away to illustrate the construction of the platform;

Fig. 2 is a sectional view, taken generally along the line 2-2 of Fig. 1, illustrating the relationship between top and bottom panels and a truss formed of rib panels which extend between the top and bottom panels;

Fig. 3 is an enlarged fragmentary sectional view of a portion of the scale platform of Fig. 2, illustrating the manner in which longitudinally extending V-shaped rib sections are connected with the top and bottom panels;

Fig. 4 is an enlarged fragmentary sectional view of an end portion of a scale platform of Fig. 1, with the top panel being removed for purposes of clarity of illustration;

Fig. 5 is an enlarged fragmentary view, taken generally along the line 5-5 of Fig. 1, illustrating the manner in which a load measuring transducer unit is mounted at one end of the scale platform; and

Fig. 6 is a fragmentary sectional view, taken generally along the line 6-6 of Fig. 1, illustrating the manner in which a load measuring transducer unit is mounted at the end of the scale platform opposite of the end shown in Fig. 5.

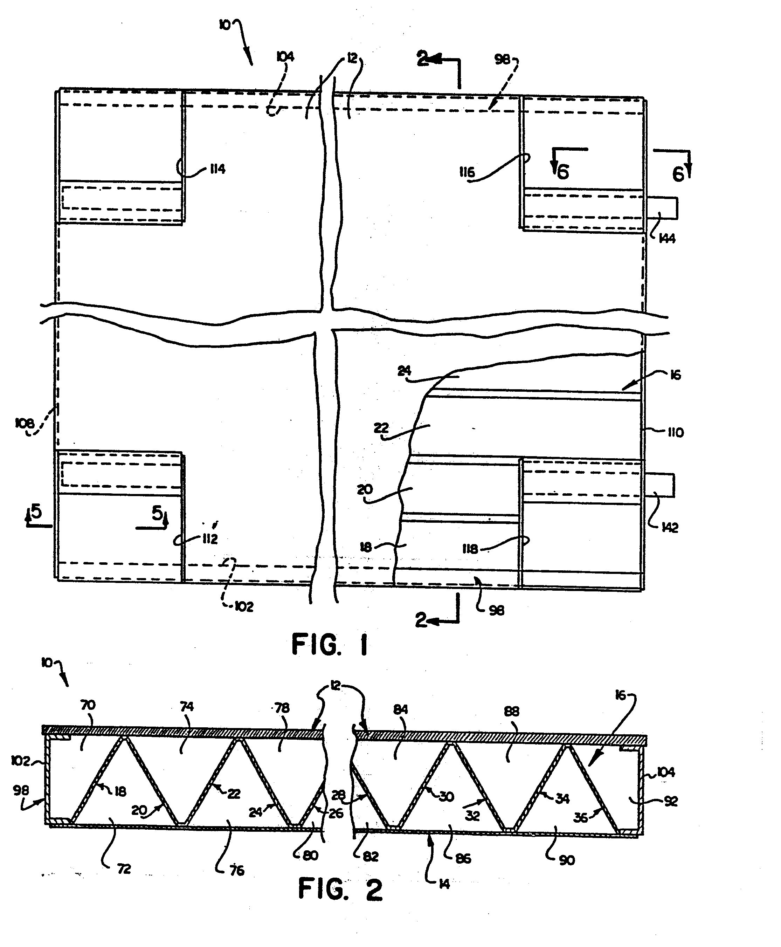

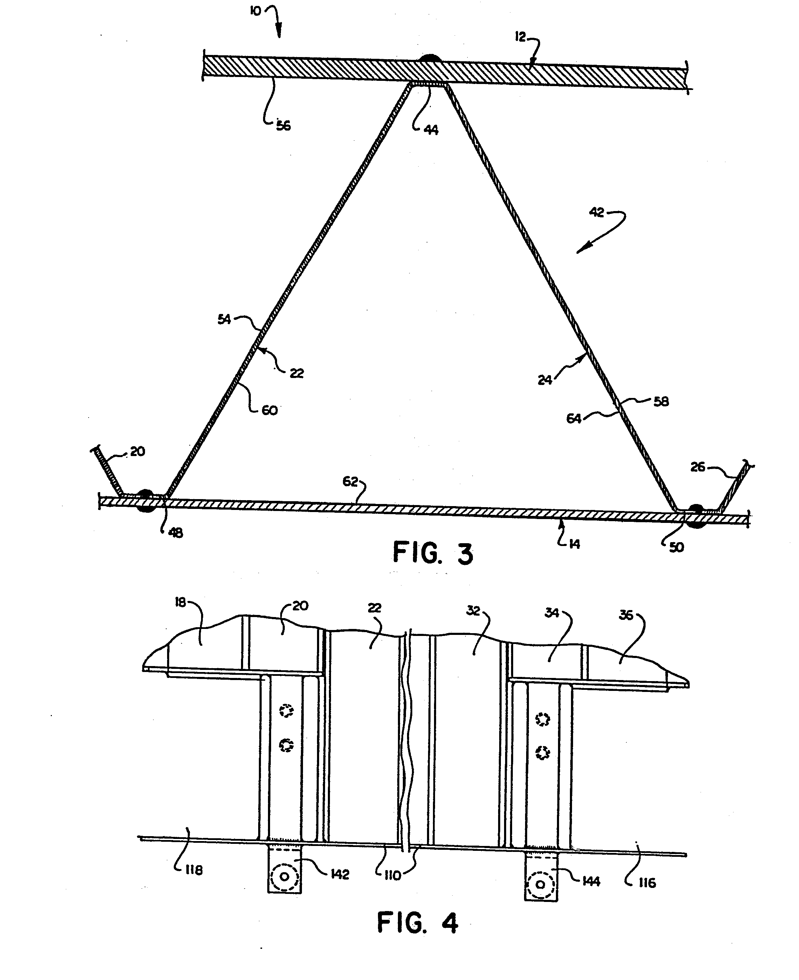

An improved scale platform 10 constructed in accordance with the present invention is illustrated in Figs. 1 and 2. The scale platform 10 has a generally retangular configuration with a flat upper or top panel 12 which receives a load to be weighed.

In accordance with a feature of the invention, a flat lower or bottom panel 14 (Fig. 2) is connected with the upper panel by a beam-truss structure 16. The beam-truss structure 16 is capable of transmitting load forces in both the longitudinal and transverse directions. Except for the beam-truss structure 16, the platform 10 is hollow so that it is relatively light in weight.

The beam-truss structure 16 is formed by a plurality of elongated rectangular rib panels 18, 20, 22, 24, 26, 28, 30, 32, 34 and 36 of sheet metal. The rib panels 18-36 extend throughout substantially the entire length of the platform 10 and have parallel longitudinal axes. The flat rib panels 18-36 are disposed between and connected with the top and bottom panels 12 and 14 to resist both vertical and horizontal shear forces. Thus the rib panels 18-36 transmit load forces as beams in a direction parallel to the longitudinal axes of the rib panels. The rib panels 18-36 transmit load forces as a truss in a direction transverse to the longitudinal axes of the rib panels.

Due to the light weight construction and load
transmitting capabilities of the beam-truss structure 16,
the platform 10 is relatively strong in both a lengthwavs
direction, parallel to the logitundinal central axes of
the panels 18-36, and a crossways direction perpendicular
to the central axes of the panels. This enables the
platform to withstand different types of loads from
different directions with minimal deflection. By
minimizing the deflection of the platform under a load,
the accuracy with which the load is measured is increased.
This is because non-vertical forces and side loads on the
transducers are minimized. In addition, the light weight
of the platform 10 maximizes the extent of the transducer
operating range which is available to measure loads
applied to the platform.

The strength of the platform 10 enables it to be
relatively thin so that appreciably lower ramps are
required when the scale assembly is mounted on a floor or
other support surface. Of course, the thin cross section
of the platform 10 enables a relatively shallow pit to be
used when the scale assembly is mounted in the floor.
With either type of installation, the light weight scale
assembly requires minimal foundation strength.

The light weight and strength of the platform 10 result
in the platform having a high strength to weight ratio and
a high rigidity to weight ratio. Thus, in one specific
instance a known truck scale platform having a length of 17 feet 6 inches and a width of 10 feet had a weight of 5,922 pounds. A truck scale platform of the same size and thickness and constructed in accordance with the present invention had a weight of 4,838 pounds. The known platform had a section modulus of 124 inches cubed. The lighter weight scale platform constructed in accordance with the present invention had a section modulus of 167 inches cubed. Thus, the new scale platform had a strength to weight ratio, that is its section modulus divided by the weight, of .0345 inches cubed per pound while the scale having the known construction had a strength to weight ratio of only .0209 inches cubed per pound. The ratio improvement was 65%.

The rib panels 18-36 are formed as V-shaped sheet metal rib sections which include a pair of rib panels. Thus, the rib panels 22 and 24 (see Fig. 3) are formed as a rib section 42.

The one-piece rib section 42 has an apex or connector section 44 which is welded to the top panel 12. The rib panels 22 and 24 form the legs of the V-shaped rib section 42. Horizontally extending feet or end sections 48 and 50 on the rib panels 22 and 24 are disposed in engagement with horizontally extending end sections on adjacent rib sections. The end sections 48 and 50 are welded to the bottom panel 14. Although only the rib panels 22 and 24 have been shown in Fig. 3, it should be understood that the other rib panels are formed as rib sections having the same construction as the rib section 42.

During construction of the platform 10, the rib sections are spot welded to the top panel 12 with the top panel facing downwardly. After this has been done, the bottom panel 14 is positioned on the ends of the rib panels 18-36. The end sections 48 and 50 of the rib section 42 and the end sections of the adjacent rib sections are then spot welded to the bottom panel 14. Thus, three pieces of metal are connected to the bottom panel 14 at each spot weld. This results in the rib section 42 being fixedly connected to the top and bottom panels 12 and 14. After all of the rib sections have been welded to the bottom panel 14, the scale platform is inverted so that the top panel 12 faces upwardly.

The interconnections between the rib panels 18-36 and the top and bottom panels 12 and 14 enables horizontal shear forces to be transmitted between the rib panels and the top and bottom panels in directions both parallel and perpendicular to the longitudinal axes of the rib panels. In addition, the interconnections between the rib panels 18-36 and the top and bottom panels 12 and 14 enables vertical shear forces to be transmitted in directions both parallel and perpendicular to the longitudinal axes of the rib panels. Thus, upon application of a vertical load to the platform 10, the rib panels 18-36 transmit load forces as beams in a direction parallel to longitudinal axes of the rib panels. This results in the top panel 12 being loaded in compression and the bottom panel 14 being loaded in tension and in the transmission of horizontal shear forces through the interconnections between the top and bottom panels 12 and 14 and the rib panels 18-36. In addition, vertical shear forces are transmitted through the rib panels 18-36 in the same manner as a beam.

The rib panels 18-36 cooperate to form a truss as viewed in a cross sectional plane extending through the platform 10 in a direction perpendicular to the longitudinal axes of the rib panels. Thus, the rib panels 18-36 have flat major side surfaces which are skewed at acute angles to the major side surfaces of the top and bottom panels 12 and 14. The upper and lower longitudinally extending edges of the rib panels are interconnected to form an array of triangles (see Fig. 2) of a truss. The top panel 12 forms the upper legs of the triangles and the bottom panel 14 forms the bottom legs of the triangles. The rib panels 18-36 extend between the top and bottom panels 12 and 14 and form intermediate legs of the triangles.

Upon application of a vertical load to a central portion of the platform 10, a first group of intermediate legs of the triangles are loaded in compression and a second group of the intermediate legs of the triangles are loaded in tension. Thus, if it is assumed that a vertical load is supplied to the platform directly above the interconnection between the upper longitudinally extending edge portions of the rib panels 22 and 24 and the top plate 12, the rib panels 18, 22, 24, 28, 32 and 36 would be loaded in compression while the rib panels 20, 26, 30 and 34 would be loaded in tension.

In the completed platform 10, the rib panel 22 (Fig. 3) has a upper major side surface 54 which faces toward the flat lower major side surface 56 of the top panel 12. Similarily, the rib panel 24 has an upper major side surface 58 which also faces toward the major side surface 56 of the top panel 12. The rib panel 22 has a lower major side surface 60 which faces downwardly toward the upper major side surface 62 of the bottom panel 14. Similarily, the rib panel 24 has a lower major side surface 64 which faces downwardly toward the upper major side surface 62 of the bottom panel 14.

The rib panels 18-36 cooperate with the top and bottom panels 12 and 14 to define a plurality of longitudinally extending empty cavities 70, 72, 74, 76, 78, 80, 82, 84, 86, 88, 90 and 92 (see Fig. 2). Each of the cavities has a generally triangular cross sectional configuration in a vertical plane extending perpendicular to the top and bottom panels 12 and 14. An upper array of cavities 70, 74, 78, 84, 88 and 92 extends downwardly from the top panel 12. A lower array of cavities 72, 74, 80, 82, 86 and 90 extends upwardly from the bottom panel 14 and are interpersed with the upper cavities.   The empty cavities
70-92 extend for substantially the entire length of the
platform 10.

The rib panels 18-36 are formed from sheet metal
having a thickness which is less than one-half the
thickness of the upper panel 12.  Although the upper and
lower panels 12 and 14 may be of the same thickness so
that the neutral axis of the platform 10 is disposed
exactly midway between them, it is preferred to make the
lower panel 14 relatively thin and the upper panel 12
somewhat thicker to enable upper panel to withstand
concentrated loads without deforming.

Although it is contemplated that the platform 10 could
be formed of metal panels having different thicknesses, in
one specific embodiment of the invention, the top panel 12
had a thickness of approximately 0.25 inches and the
bottom panel 14 had a thickness of approximately 0.1196
inches (11 gauge).  In this specific embodiment of the
invention, the rib panels 18-36 were formed of sheet metal
having a thickness of approximately 0.0747 inches (14
gauge).  Since the beam-truss structure 16 of this
specific embodiment of the invention was formed of
relatively light sheet metal, compared to the top and
bottom panels 12 and 14, the scale platform was relatively
light in weight.

A rectangular frame 98 (see Fig. 1) extends around the
periphery of the platform 10 and is welded to the upper and lower panels 12 and 14 and the rib panels 18-36. The rectangular frame 98 includes a pair of parallel side beams 102 and 104 which extend lengthways of the platform 10. A pair of parallel end walls 108 and 110 are welded to the side beams 102 and 104 and to the ends of the rib panels 22-32 (see Figs. 1 and 4).

The rib panels 18-36 transmit horizontal and vertical shear forces to the end walls 108 and 110, in a manner similar to a beam, upon the application of a load to a central portion of the platform 10. The rib panels 18-36 transmit load forces to the side beams 102 and 104, in a manner similar to a truss, upon application of a load to a central portion of the platform 10.

The frame 98 includes rigid rectangular transducer boxes 112, 114, 116 and 118 (Fig. 1). The transducer boxes 112-118 are disposed at the corners of the rectangular platform 10. The transducer boxes 112-118 are partially formed by the side beams 102 and 104 and the end walls 108 and 110 (see Fig. 1). The rectangular boxes 112 and 118 are welded to the ends of the rib panels 18 and 20. Similarily, the rectangular boxes 114 and 116 are welded to the ends of the rib panels 34 and 36.

Load measuring transducers are mounted at the corners of the platform 10 in association with the boxes 112-118. It is preferred that shear beam load cells be used as the load measuring transducers. The shear beam load cells have a known construction and are similar to the load cells which are commercially available from Hottinger, Baldwin Measurements, Inc. of Natick, Massachusetts, U.S.A. The shear beam load cells are mounted in association with the transducer boxes 112-118 in the same manner as disclosed in U.S. Patent 4,266,624. It is contemplated that the platform 10 will be used as the first platform in a series of interconnected platforms in the manner disclosed in U.S. Patent No. 4,266,624.

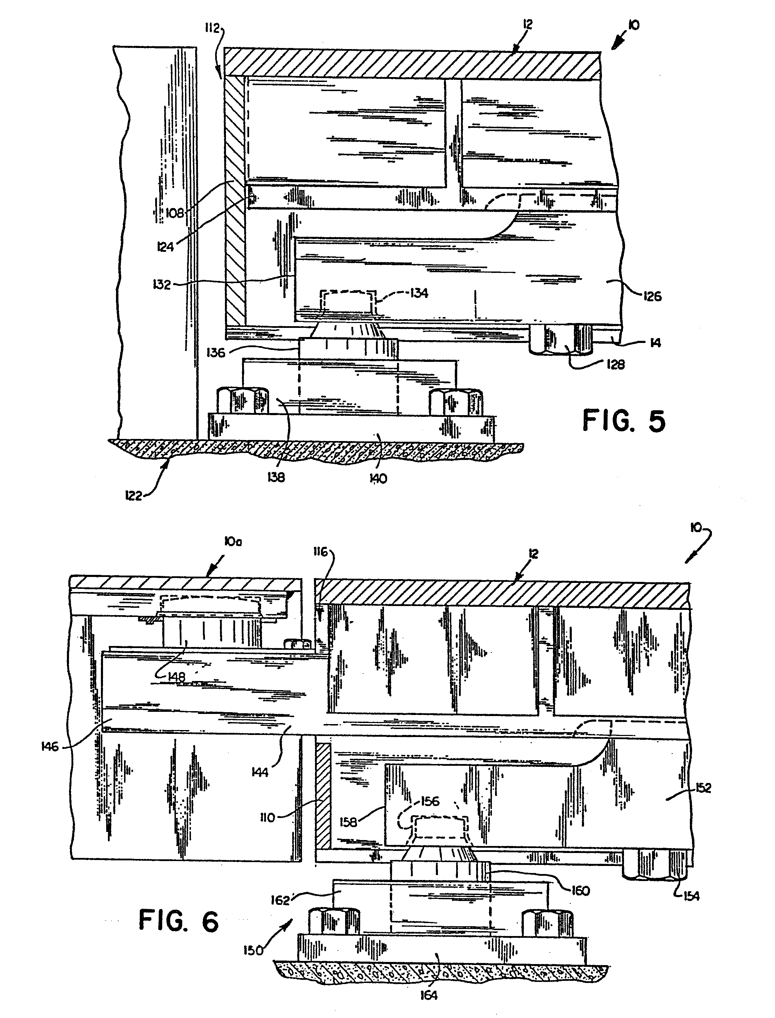

The transducer unit 122 includes a support block 124 (Fig. 5) which is fixedly connected with the frame 98. A cantilevered load arm 126 is connected with the support block 124 by bolts 128. The free end 132 of the load arm 126 is provided with a recess 134 in which a load pin 136 extends. A retaining block 138 is provided with an opening through which the load pin 136 extends into engagement with a base plate 140. Strain gauges are connected with the load arm 126 to provide an output signal which varies as a function of the magnitude of the load on the platform 10.

Only the transducer unit 122 has been shown in Fig. 5 in association with the transducer box 112. However, a similar transducer unit is associated with the transducer box 114.

The opposite end of the platform 10 is connected with a next succeeding platform of the scale assembly. Thus, the transducer boxes 116 and 118 have outwardly projecting support arms 142 and 144 (see Fig. 1 and 4) which are fixedly connected with the frame 98 of the scale platform 10. The cantilevered support arm 144 has a free outer end 146 (see Fig. 6) with a circular opening into which a pin 148 extends. The pin 148 is received in an opening in the next adjacent platform 10a.

A load measuring transducer unit 150 includes a cantilevered arm 152 (Fig. 6) which is fixedly connected with the support arm 146 by bolt 154. A recess 156 in a free outer end 158 of the load arm 152 is engaged by load pin 160. The lower end portion of the load pin 160 extends through an opening of a stationary retaining plate 162 into engagement with a base plate 164.

Only the transducer unit 150 has been shown in Fig. 6 in association with the transducer box 116. However, a similar transducer unit is associated with the transducer box 118. Since the transducers are mounted in the boxes 112, 114, 116 and 118 in the same manner as described in U.S. Patent 4,266,624, the mounting of the transducers will not be further described herein in order to avoid prolixly of description. Of course, other types of transducers could be used if desired.

The present invention relates to a scale assembly having a new and improved platform 10 which is relatively light in weight and relatively strong. The relatively light weight of the scale platform 10 results in a lower initial or dead weight on the transducers assocated with the transducer boxes 112-118. Therefore, heavier loads can be accurately weighed by the transducers. In addition, the relatively light weight platform 10 tends to minimize deflection of the transducer arms 126 and 152 to minimize weighing errors due to non-vertical forces being sensed by the transducers. The light weight of the platform 10 also enables the scale assembly to be installed in relatively poor soil conditions without pilings or other major reinforcing.

The scale platform 10 is, for its weight, relatively strong and can resist both horizontal and vertical shear forces. In addition, the strength of the platform 10 is essentially the same in lengthwise and crosswise directions so that a load can be moved onto and off of the scale platform 10 from any direction. The uniform strength and high rigidity of the platform 10 makes it feasible to build a relatively wide platform.

The new and improved platform 10 includes parallel top and bottom panels 12 and 14 which are interconnected by a truss 16. The truss 16 is formed of sheet metal rib panels 18-36 which cooperate with the top and bottom panels 12 and 14 to define longitudinally extending empty cavities 70-92 which have a triangular cross sectional configuration. The cavities 70, 74, 78, 84, 88 and 92 are

0139204

disposed in an uppper array which extends downwardly from the top panel 12.  The cavities 72, 76, 80, 82, 86 and 90 are disposed in a lower array which extends upwardly from the bottom panel 14 and is interpersed with the array of downwardly extending cavities.

Patent Claims
_____

1.  A scale assembly for use in weighing a load, said scale assembly comprising transducer means for providing an output indicative of the magnitude of a load, and rectangular platform means connected with said transducer means for receiving a load to be weighed, said platform means comprising a generally rectangular top panel having an upper major side surface for engaging a load and a lower major side surface, a generally rectangular bottom panel which is spaced from and extends parallel to said top panel and has an upper major side surface facing toward said top panel, and sheet metal rib panels extending between and connected to the lower major side surface of said top panel and the upper major side surface of said bottom panel, said sheet metal rib panels having major side surfaces which are skewed at acute angles to the major sides of said top and bottom panels, said rib panels cooperating to define a plurality of empty cavities which extend throughout the length of said platform, each of said cavities having a generally triangular cross sectional configuration in a vertical plane extending perpendicular to longitudinal central axes of said cavities, said cavities being disposed in an upper array of downwardly extending cavities and a lower array of upwardly extending cavities interspersed with the downwardly extending cavities.

2.    A scale assembly as set forth in claim 1 further including a plurality of wall means for defining a plurality of rectangular recesses each of which is disposed at a corner of said platform means, each of said wall means including a first wall section extending transversely to longitudinal central axes of said rib panels and a second wall section extending parallel to longitudinal central axes of said rib panels, first connector means for connecting end portions of a plurality of said rib panels to said first wall section, second connector means for connecting said first and second wall sections with said top and bottom panels, and force transmitting means connected with said first and second wall sections for transmitting load forces to said transducer means.

—  3.  A scale assembly as set forth in claim 1 wherein said rib panel has a thickness which is less than half the thickness of said top panel.

4.    A scale assembly for use in weighing a load, said scale assembly comprising a plurality of transducer means for providing an output indication of the magnitude of a load, and platform means having a high strength and rigidity to weight ratio, said platform means having side edge portions disposed in a rectangular array and connected with said transducer means to transmit load forces from said platform means to said transducer means, said platform means including parallel rectangular top and bottom panels and force transmitting means disposed between and connected with said top and bottom panels in a beam-truss design capable of transmitting load forces to each of the side edge portions of said platforms means upon application of a load to the central portion of said platform means, said force transmitting means including a plurality of elongated rib panels disposed between and connected with said top and bottom panels in such a manner as to transmit load forces as beams in a direction parallel to the longitudinal axes of said rib panels and to transmit load forces as a truss in a direction transverse to the longitudinal axes of said rib panels, said rib panels having flat major side surfaces which are skewed at acute angles to major side surfaces of said top and bottom panels, said rib panels each having an upper longitudinal edge portion which is connected to said top panel and a lower longitudinal edge portion which is connected to said bottom panel to transmit horizontal shear forces between said rib panels and said top and bottom panels in directions parallel to the longitudinal axes of said rib panels and to transmit vertical shear forces in directions
perpendicular to the longitudinal axes of said rib panels
upon application of a vertical load to said platform
means, said rib panels being connected with said top and
bottom panels to form an array of triangles as viewed in a
cross sectional plane extending through said platform
means in a direction perpendicular to the longitudinal
axes of said rib panels, said top panel forming upper
legs, said bottom panel forming lower legs and said rib
panels forming intermediate legs of triangles of said
array of triangles, a first group of intermediate legs of
triangles in said array of triangles being loaded in
compression and a second group of the intermediate legs of
triangles in said array being loaded in tension by the
application of a vertical load to said platform means,
said legs of said second group of intermediate legs of
triangles being interspersed with said legs of said first
group of intermediate legs of triangles.

FIG. 1

FIG. 2

0139204

FIG. 3

FIG. 4

**FIG. 5**

**FIG. 6**